# EUROPEAN PATENT APPLICATION

(11) **EP 1 369 795 A1**
(43) Date of publication of application: **10.12.2003**
(21) Application number: 02012190.1
(22) Date of filing: 03.06.2002
(51) Int. Cl.: G06F 17/60

(54) **Method for controlling the propagation of metadata items**

(71) Applicant: DEUTSCHE THOMSON-BRANDT GMBH, 78048 Villingen-Schwenningen (DE)
(72) Inventor: Schiller, Harald, 30539 Hannover (DE); Adolph, Dirk, 30952 Ronnenberg (DE); Hörentrup, Jobst, 30161 Hannover (DE); Klausberger, Wolfgang, 30880 Laatzen (DE); Kochale, Axel, 31832 Springe (DE)

(57) **Abstract**

The present invention relates to propagation of metadata items to recording media 1, 2 and/or to devices 3, 4 for reading from and/or writing to recording media.

It is an object of the invention to propose a method for enabling and controlling automatic propagation of metadata items

The method comprises the steps of:
providing metadata items with a propagation property, the propagation property defining to which recording media 1, 2 and/or to which devices 3, 4 the metadata items shall propagate, and on which recording media 1, 2 and/or in which devices 3, 4 the metadata items shall be stored, and
automatically propagating and storing the metadata items in accordance with the propagation property at least when a recording medium 1, 2 is inserted into or removed from a device 3, 4, or when the device 3, 4 is powered up or down.

## Description

The present invention relates to a method for controlling the propagation of metadata items to recording media and/or to devices for reading from and/or writing to recording media, and to a device and a recording medium for performing the method.

The future of home entertainment will be characterised by two important developments. The first development is that an increasing amount of metadata items will be available. The metadata items will contain all kind of additional data related to multimedia objects, recording media and consumer electronic devices. The second development is that consumer electronic devices will increasingly be connected to networks allowing for communication and data exchange between the devices.

When dealing with metadata items in an environment of removable recording media and consumer electronic devices connected to a network, an important aspect is how the metadata items shall propagate between the involved devices and/or recording media. Known metadata schemes make no assumptions about metadata propagation. Their approach with respect to propagation of metadata is completely static. Any propagation of metadata items must be explicitly initiated by the user. However, it would be very efficient and user friendly if certain metadata items could be automatically propagated in a controlled way. A straightforward solution for this purpose is not available, since a propagation behaviour appropriate for one kind of metadata item might be inappropriate for a different kind of metadata item.

It is, therefore, an object of the present invention to propose a method for enabling and controlling automatic propagation of metadata items to recording.media and to devices for reading from and/or writing to recording, media.

A method according to the invention comprises the steps of: providing metadata items with a propagation property, the propagation property defining to which recording media and/or to which devices the metadata items shall propagate, and on which recording media and/or in which devices the metadata items shall be stored, and automatically propagating and storing the metadata items in accordance with the propagation property at least when a recording medium is inserted into or removed from a device, or when the device is powered up or down. Though the terms "inserted into" and "removed from" are used in the above description, the invention is applicable to any form of contact between the recording medium and the device, which allows for data exchange, including contactless techniques. By adding a propagation property to each metadata item, any given metadata scheme can be augmented to allow for automatic metadata propagation. The propagation property can, for example, be embodied as a flag vector of predetermined dimension. The automatic propagation and storage of the metadata items when a recording medium is inserted into a device, or when the device is powered up, guarantees that both, device and recording medium, are provided with all necessary metadata items before any further action is initiated. Automatically propagating the metadata items when the recording medium is removed from the device, or when the device is powered down, makes sure that the recording medium and the device are provided with the most recent metadata items, i.e. that no changes, which might have been made to the metadata items, are lost. In a more general approach, metadata items are automatically propagated when a transition occurs from one "device state" to another "device state", e.g. from "off" to "on" or from "recording medium loaded" to "no recording medium loaded" etc. Besides the above mentioned device states many other device states can be used.

Advantageously, the propagation property assumes one or more of a plurality of predefined values. In this way different schemes for propagating metadata items can be realised. For each metadata scheme a set of allowable values for the propagation property, the so-called "storage states", must be defined. In addition, it must be specified, which metadata items shall be copied to which locations and when. This is preferably done by defining a set of rules, each rule being associated to a certain combination of one or more of the above storage states and one or more of the above device states. The rules specify what shall be performed on a metadata item with a certain storage state in case a certain device state has been reached.

Possible values for the propagation property include:
- global
- recording medium only
- all recording media
- device only
- all devices
- temporary.

A "global" metadata item is meant to propagate to any accessible storage location, i.e. from a recording medium to all devices the recording medium ever gets inserted into, or from a device to all recording media ever inserted there.

A "recording medium only" metadata item is meant to be confined to the recording medium it resides on, except for an eventual temporary storage in a device. As soon as the recording medium is removed from the device, the copy of the metadata item temporarily stored in the device has to be removed as well.

An "all devices" metadata item is similar to a "recording medium only" metadata item, with the difference that the metadata item will propagate to any device the recording medium ever is inserted into, and it will remain stored in the device even after removal of the recording medium. However, it will never propagate from any of these devices back to any other recording medium.

A "device only" metadata item is meant to never leave a device, but to remain in the device even if the device is powered down. A device only metadata item will never exist on any recording medium.

An "all recording media" metadata item behaves similar to a "device only" metadata item, with the difference that the metadata item will propagate to any recording medium ever inserted into the device. However, the metadata item will never propagate from any of these recording media back to any other device, except for temporary storage.

A "temporary" metadata item can only exist in a device, which it will never leave. Temporary metadata items will cease to exist after power down of the device. They can, for example, be useful during manipulations of metadata items.

Although the above defined values for the propagation property are sufficient for a controlled propagation of metadata items, further values can, of course, be used.

Favourably, the method according to the invention further comprises the step of temporarily storing into a first memory of the device for reading from and/or writing to recording media all metadata items accessible in a second memory of the device when the device is powered up and all metadata items accessible on a recording medium whenever such recording medium is inserted into the device. In this way, during operation, all accessible metadata items are stored in the first memory. The first memory, therefore, always contains the totality of metadata items from the device and from all recording media inserted therein. The first memory actually emulates all inserted recording media and the second memory. This enables an easy manipulation, handling and re-classification of metadata items. Favourably, the first and the second memory are a volatile memory and a permanent memory, respectively. However, the first memory can also be realized as a permanent memory.

According to a further advantageous refinement of the invention, the method further comprises the step of retrieving additional metadata items from a network and at least temporally storing these metadata items in the device. In this way further helpful metadata items can be obtained from other devices of the network. The term "network" denotes any number of devices which are connected in a way that enables data exchange between the devices, including fixed wire and wireless connections.

Advantageously, the method further comprises the step of adding a port identifier to the metadata items upon storage, the port identifier indicating the source of the metadata items. The "recording medium only" metadata items and the "all devices" metadata items stored in the first memory must consistently be written back to the recording medium they came from. Furthermore, for "all recording media" metadata items it is necessary to distinguish between those that are resident in the device (and will persist there and be written to any inserted recording medium), and those which are temporarily stored in the first memory because they have been found on one of the inserted recording media, to which they have been previously written by a different device. In a device capable of holding, a plurality of recording media, it is critical for a consistent write back to know from which of the inserted recording media each metadata item came. By adding a port identifier to the metadata items upon storage, all of the above problems are easily solved.

Favourably, the method according to the invention further comprises the step of modifying the propagation properties of stored metadata items. This modifying of propagation properties can either be performed automatically or by user intervention. In this way further possibilities for managing the propagation behaviour of metadata items are provided.

According to the invention, the method further comprises the steps of writing back the metadata items in accordance with the propagation property and the port identifier from the first memory of the device to a recording medium at least when the recording medium is removed from the device, or from the first memory of the device into the second memory of the device at least when the device is powered down. This ensures that all metadata items are written to the location indicated by their propagation property, and that both, the recording medium and the device, are provided with the most recent metadata items in case changes have been made to the metadata items.

According to a further advantageous refinement of the invention, the method further comprises the step of sending metadata items stored in the device to a network. This allows to provide helpful metadata items to other devices in the network.

Favourably, the steps of writing metadata items back to the recording medium, of moving metadata items to the second memory, and/or of sending metadata items to the network comprise overwriting of the metadata items existing on the recording medium, in the second memory, and/or in the network. This ensures that outside the first memory every metadata item has a definite propagation property, which would not be the case if metadata items were merged. Only inside the first memory of the device the same metadata items, i.e. metadata items having an identical metadata body, may exist with different values for the propagation property. Therefore, the data structure of the metadata items must permit to hold more than one storage state.

Advantageously, the method according to the invention further comprises the step of providing at least some of the metadata items with an expiration property for limiting the propagation of the metadata items. This expiration property can, for example, be a time limit, a limit in the number of propagation steps or any other property, which might inhibit or otherwise limit propagation. Such an expiration property becomes especially important in case of a "global" metadata item, which could otherwise develop a "virus-like" nature.

Favourably, the method further comprises the step of providing the recording medium and/or the device for reading from and/or writing to recording media with a protection property for preventing the propagation of metadata items. Any of the above defined propagation rules are meant to be superseded by the protection property, i.e. any act of copying as demanded by the propagation rules will be performed only as far as the protection property of the involved recording media and/or devices allows. This enables, for example, prevention of an undesired propagation of metadata items.

Advantageously, the protection property either provides for a protection against export, against import, or against both export and import of the metadata items from/to the recording medium and/or the device for reading from and/or writing to recording media. In this way a user can decide whether a device or a recording medium shall be protected from propagating metadata items to. other recording media and/or devices, or from receiving metadata items from other recording media or devices, or both.

According to the invention, a device for reading from and/or writing to recording media comprises means for performing a method according to the invention. Such a device provides a user with a very efficient and user-friendly way of controlling metadata propagation.

Favourably, a recording medium comprises metadata items having a propagation property for performing a method according to the invention. Such a recording medium optimally supports the inventive method.

Advantageously, a data stream comprises metadata items having a propagation property for performing a method according to the invention. This data stream, for example, is optimally suitable for a network comprising a device according to the invention.

For a better understanding of the invention, exemplary embodiments are specified in the following description of advantageous configurations with reference to the figures. It is understood that the invention is not limited to these exemplary embodiments and that specified features can also expediently be combined and/or modified without departing from the scope of the present invention. In the figures:
- Fig. 1: shows a metadata propagation scheme according to the invention;
- Fig. 2: shows a scheme of device state transitions; and
- Fig. 3: shows the application of propagation rules for different propagation properties using a volatile memory.

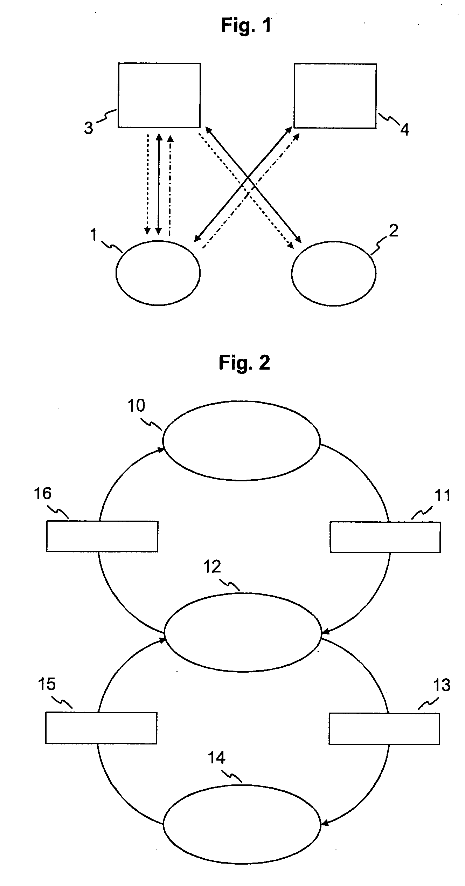

Fig. 1 shows a metadata propagation scheme according to the present invention. Depicted is the propagation of metadata items between a first recording medium 1 and a first and a second device 3,4 for reading from and/or writing to recording media, and between the first device 3 and a second recording medium 2. The figure is limited to "global" (solid arrow), "all recording media" (short dashed arrow) and "all devices" (dash dotted arrow) metadata items, since in the case of "recording medium only" and "device only" metadata items no actual propagation occurs between the devices 3, 4 and the recording media 1, 2. A "global" metadata item can reside either on a recording medium 1, 2 or on a device 3, 4 for reading from and/or writing to recording media. In case it resides on a recording medium 1, 2, it will propagate to any device 3, 4 the recording medium 1, 2 is inserted into. The metadata item will then propagate from the device 3, 4 to any future recording medium 1, 2 inserted therein.
In case the "global" metadata item resides in either device 3, 4, it will first propagate to a recording medium 1, 2 inserted therein, and will continue to propagate from the recording medium 1, 2 to any further device 3, 4 the recording medium 1, 2 is inserted into.

An "all recording media" metadata item can only propagate from a device 3, 4 for reading from and/or writing to recording media to a recording medium 1, 2 inserted therein. It is stored on the recording medium 1, 2, but contrary to a "global" metadata item it will not continue to propagate from the recording medium 1, 2 to other devices 3, 4.

An "all devices" metadata item can only propagate from a recording medium 1, 2 to a device 3, 4 for reading from and/or writing to recording media. It will be stored in any device 3, 4 the. recording medium 1, 2 is inserted into, but it will not propagate from the device 3, 4 to any other recording medium 1, 2.

Fig. 2 shows the propagation of metadata items using a scheme of device state transitions. Depicted are three main states: A first state "power off" 10, a second state "power on, no recording medium recognized" 12, and a third state "power on, recording medium recognized" 14. It is assumed that the transition to the "power off" state 10 is always through the "power on, no recording medium recognized" state 12. The transition from the first state 10 to the second state 12 is through a "power up" step 11. Correspondingly, the transition between the second state 12 and the first state 10 is through a "power down" step 16.
A state transition from the second state 12 to the third state 14 occurs through a "recording medium welcome" step 13. The step 13 comprises at least two cases:
- recognition of a recording medium after it is inserted into the device or into one of a plurality of ports of the device; and
- recognition of a recording medium, physically already present in the device, after power up.
Correspondingly, the transition between the third state 14 and the second state 12 occurs through a "recording medium farewell" step 15. As before, also the "recording medium farewell" step 15 comprises at least two cases:
- farewell of a recording medium prior to imminent removal of the recording medium from the device; and
- farewell of a recording medium, which physically remains in the device, prior to imminent power down.

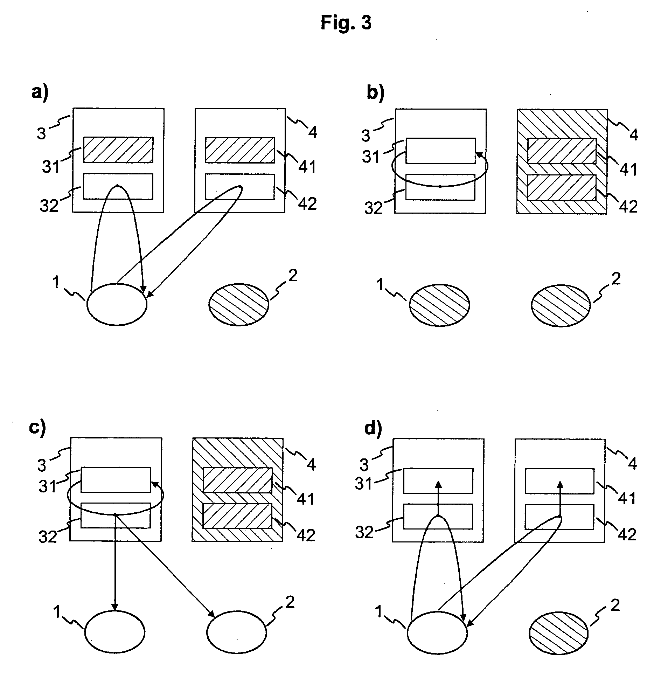

Fig. 3 shows the application of propagation rules for metadata items with different propagation properties using a volatile memory. Depicted are similar to Fig. 1 a first and a second recording medium 1, 2 and a first and a second device 3, 4 for reading from and/or writing to recording media, each device 3, 4 comprising a permanent memory 31, 41 and a volatile memory 32, 42. Inactive parts of the devices 3, 4 and inactive recording media 1, 2 are hatched, inactive meaning that they do not take part in metadata propagation.

In Fig. 3a, the handling of a "recording medium only" metadata item resident on the first recording medium 1 is shown. When the recording medium 1 is inserted into the device 3, 4, the "recording medium only" metadata item is copied to the volatile device memory 32, 42. Upon a "recording medium farewell" device state transition the copy of the "recording medium only" metadata item is written back to the recording medium 1 and removed from the volatile memory 32, 42. In the device 3, 4 no copy of the metadata item remains, therefore the "recording medium only" metadata item cannot propagate to the second recording medium 2 either.

Fig. 3b depicts the handling of a "device only" metadata item resident in the permanent memory 31 of the first device 3. Upon a "power up" state transition 11 the "device only" metadata item is copied from the permanent memory 31 to the volatile memory 32. Upon a "power down" state transition the metadata item is written back to the permanent memory 31 and removed from the volatile memory 32. No copy of the "device only" metadata item leaves the device 3, i.e. no copy is written to the recording medium 1, 2.

Fig. 3c shows the handling of an "all recording media" metadata item resident in the permanent memory 31 of the first device 3. Upon a "power up" state transition, a copy of the metadata item is written to the volatile memory 32. Upon a "recording medium farewell" state transition an additional copy of the "all recording media metadata-item" in the volatile memory 32 is written to the recording medium 1, 2. Upon a "power down" state transition, the copy of the metadata item in the volatile memory 32 is removed and written back to the permanent memory 31. The copy of the "all recording media" metadata item on the recording medium 1, 2 does not propagate to any other device the recording medium 1, 2 is inserted into.

The handling of an "all devices" metadata item resident on the first recording medium 1 is shown in Fig. 3d. Upon a "recording medium welcome" state transition a copy of the "all devices" metadata item is written to the volatile memory 32, 42. When a "recording medium farewell" state transition occurs, the copy of the metadata item in the volatile device memory 32, 42 is written back to the recording medium 1. When a "power down" state transition occurs, the copy of the "all devices" metadata item is written to the permanent memory 31, 41 and removed from the volatile memory 32, 42. The "all devices" metadata item does not propagate to any other recording medium.

## Claims

1. Method for controlling the distribution of metadata items to recording media (1, 2) and/or to devices (3, 4) for reading from and/or writing to recording media, **characterized in that** it comprises the steps of:
providing the metadata items with a propagation property, the propagation property defining to which recording media (1, 2) and/or to which devices (3, 4) the metadata items shall propagate and on which recording media (1, 2) and/or in which devices (3, 4) the metadata items shall be stored, and
automatically propagating and storing the metadata items in accordance with the propagation property at least when a recording medium (1, 2) is inserted into or removed from a device (3, 4), or when the device is powered up or down.

2. Method according to claim 1, **characterized in that** the propagation property assumes one or more of a plurality of predefined values.

3. Method according to either of claims 1 or 2, further comprising the step of
temporarily storing into a first memory (32, 42) of the device (3, 4) for reading from and/or writing to recording media all metadata items accessible in a second memory (31, 41) of the device (3, 4) at least when the device (3, 4) is powered up and all metadata items accessible on a recording medium (1, 2) at least whenever such recording medium is inserted into the device (3, 4).

4. Method according to one of claims 1-3, further comprising the step of
retrieving additional metadata items from a network and at least temporally storing them in the device (3, 4).

5. Method according to either of claims 3 or 4, further comprising the step of
adding a port identifier to the metadata items upon storage, the port identifier indicating the source of the metadata items.

6. Method according to any of claims 3-5, further comprising the step of
changing the propagation properties of stored metadata items.

7. Method according to any of claims 3-6, further comprising the steps of
writing back the metadata items, in accordance with the propagation property and the port identifier, from the first memory (32, 42) of the device (3, 4) to a recording medium (1, 2) at least when the recording medium (1, 2) is removed from the device (3, 4), and/or
moving the metadata items from the first memory (32, 42) of the device (3, 4) into the second memory (31, 41) of the device (3, 4) in accordance with the propagation property and the port identifier at least when the device (3, 4) is powered down.

8. Method according to claim 7, further comprising the step of
sending metadata items stored in the device (3, 4) to a network.

9. Method according to either of claims 7 or 8, **characterized in that** the step of writing the metadata items back to the recording medium (1, 2), the step of moving the metadata items to the second memory (31, 41), and/or the step of sending metadata items to the network comprise overwriting of the metadata items existing on the recording medium (1, 2), in the second memory (31, 41), and/or in the network, respectively.

10. Method according to any of the preceding claims, further comprising the step of providing the metadata items with an expiration property for limiting the propagation of the metadata items.

11. Method according to any of the preceding claims, further comprising the step of providing the recording medium (1, 2) and/or the device (3, 4) for reading from and/or writing to recording media with a protection property for preventing the propagation of metadata items.

12. Method according to claim 11, **characterized in that** the protection property provides for either a protection against export, against import, or against both export and import of the metadata items from/to the recording medium (1, 2) and/or the device (3, 4) for reading from and/or writing to recording media.

13. Device (3, 4) for reading from and/or writing to recording media, **characterized in that** it comprises means for performing a method according to anyone of claims 1-12.

14. Recording medium (1, 2), **characterized in that** it comprises metadata items having a propagation property for performing a method according to anyone of claims 1-12.

15. Data stream, **characterized in that** it comprises metadata items having a propagation property for performing a method according to anyone of claims 1-12.
